# EUROPÄISCHE PATENTSCHRIFT

(11) **EP 2 704 965 B1**
(45) Veröffentlichungstag und Bekanntmachung des Hinweises auf die Patenterteilung: **27.07.2016**
(21) Anmeldenummer: 12727280.5
(22) Anmeldetag: 04.05.2012
(51) Int. Cl.: B65G 9/00, F16D 57/06

(54) **LAUFWAGEN MIT EINEM BREMSMODUL FÜR EINEN SCHWERKRAFTHÄNGEFÖRDERER**
RUNNING CARRIAGE HAVING A BRAKE MODULE FOR A SUSPENDED GRAVITY CONVEYOR
CHARIOT COMPRENANT UN MODULE DE FREIN POUR UN TRANSPORTEUR À CHARGE SUSPENDUE OPÉRANT PAR GRAVITÉ

(30) Priorität: 04.05.2011 DE 102011100739; 23.12.2011 DE 102011122569; 21.04.2012 DE 102012008088
(43) Veröffentlichungstag der Anmeldung: 12.03.2014
(73) Patentinhaber: Volkswagen Aktiengesellschaft, 38440 Wolfsburg (DE)
(72) Erfinder: BAUMERT, Josef, 38446 Wolfsburg (DE); NENDEL, Klaus, 09569 Oederan (DE); NESTLER, Michael, 09127 Chemnitz (DE); DRECHSLER, Florian, 09112 Chemnitz (DE); KICK, Marco, 38444 Wolfsburg (DE); LEHMANN, Maik, 38116 Braunschweig (DE)
(74) Vertreter: Braun, Hartmut
(86) Internationale Anmeldenummer: PCT/EP2012/001913
(87) Internationale Veröffentlichungsnummer: WO 2012/150036

(56) Entgegenhaltungen:
- AT-B- 378 159
- DE-A1- 3 618 509
- GB-A- 2 082 532
- US-A- 5 281 033

## Beschreibung

Die Erfindung betrifft einen Laufwagen mit einem Bremsmodul für einen Schwerkrafthängeförderer. Die Schwerkraft wird bereits seit langer Zeit zum Transport von Stückgütern genutzt. Dabei bietet sich der Vorteil, dass keine zusätzlichen Antriebe benötigt werden, wenn die entsprechende Neigung der Förderstrecke realisiert werden kann. Bei Schwerkraftförderern wirkt als antreibende Kraft auf das Fördergut ausschließlich die Schwerkraft. Das Fördergut gleitet oder rollt beispielsweise auf Rutschen oder Rollenbahnen entweder auf einer geneigten Förderstrecke abwärts oder es fällt wie bei Fallrohren im freien Fall. Problematisch bei diesen Schwerkraftförderern ist, dass die Fördergeschwindigkeit sowohl wesentlich vom Reib- bzw. Widerstandsbeiwert zwischen Fördergut und den Tragelementen als auch von der Fördergutmasse beeinflusst wird. Die Fördergeschwindigkeit ist entweder so gering, dass das Gut stehen bleibt bzw. so hoch, dass die Gefahr einer Kollision mit dem vorherigen Gut besteht.

Der beim Abwärtsgleiten oder Rollen auftretende Reibungswiderstand - der Gleit- bzw. Rollreibungswiderstand muss durch die auf das Fördergut wirkende Schwerkraft überwunden werden. Daher sind Schwerkraftförderer derzeit nur dort einsetzbar, wo keine exakt definierte Fördergeschwindigkeit eingehalten werden muss, da diese - abgesehen vom freien Fall - immer von den aktuellen Reibungsverhältnissen zwischen Fördergut und Gleit- bzw. Rollenbahn abhängt. Die Reibungsverhältnisse können sich dabei im Laufe ihres Betriebes in gewissen Grenzen ändern, z.B. infolge Verschmutzung, Verschleiß, aber auch durch schwankende Guteigenschaften, welche die Reibungsverhältnisse beeinflussen. So dienen Schwerkraftförderer derzeit hauptsächlich als Verkettungselemente zwischen angetriebenen Stetigförderern, als Beschickungsförderer und zur abwärts geneigten, steilen oder senkrechten Abwärtsförderung von Schütt- und Stückgütern. Dabei lassen sich bisherige Schwerkraftförderer in die drei Grundtypen Rutschen, Fallrohre und Rollenbahnen einteilen, wobei diese immer flurgebundene bzw. aufgeständerte Förderer darstellen.

Beim Rutschen gleitet das Fördergut auf einer geneigten offenen oder geschlossenen Rinne (Rutsche) abwärts. Der Neigungswinkel der Rutsche muss dabei größer als der Reibungswinkel der Ruhe zwischen Fördergut und Rutsche sein, damit das Gut an jeder Stelle der Rutsche von selbst losrutscht und auch nicht von selbst zum Stillstand kommen kann. Dessen ungeachtet wird das Gut mit steigender Förderlänge bei gleichbleibender Gleitreibungszahl beschleunigt. Rutschen werden als Einweg-, Mehrweg- und Teleskoprutschen in gerader oder gekrümmter Ausführung hergestellt. Die meist aus Holz oder Stahlblech gefertigten geraden Rutschen erhalten, je nach Fördergut, einen Neigungswinkel von 20 bis 80°. Die Gleitbahnen der Rutschen werden häufig mit Belägen aus Kunststoffen versehen, die den Verschleiß und die Reibung verringern. Die Gutbewegung auf der Rutsche entspricht dem Prinzip der schiefen Ebene.

Wendelrutschen besitzen im Gegensatz zu den geraden Rutschen eine schraubenförmige Gleitbahn, wodurch auf das Fördergut außer den Schwer- und Reibungskräften noch Fliehkräfte wirken, welche wiederum die Reibungskräfte erhöhen. Bei voll ausgebildeter Wendel (Vollwendel; mindestens eine ganze Steigung der Schraubenlinie bzw. mindestens eine Gutumlenkung in der Horizontalen von 360°) dienen die Wendelrutschen zur senkrechten Abwärtsförderung. Ist nur eine Umlenkung des Förderstromes < 360° in der Horizontalen gefordert, genügt ein Wendelsegment. Beide Rutschen sind sowohl für Stück- als auch für Schüttgüter geeignet.

Fallrohre dienen hingegen zur senkrechten Abwärtsförderung von unempfindlichen Schüttgütern auf Lagerplätzen, in Schiffen usw. Neben einzelnen einsetzbaren Fallrohren, die auch geneigt zu betreiben sind (analog Rutsche), kommen komplette Fallrohrsysteme zum Einsatz.

Rollenbahnen entsprechen in Aufbau und Anforderungen an das Fördergut Rollenförderern, nur dass die Rollenbahnen im Gegensatz zu Rollenförderern keine angetriebenen Rollen benötigen, da es sich hier um Schwerkraftförderer, d.h. um ausschließliche Abwärtsförderung handelt. Rollenbahnen haben Tragrollen, deren Achsen fest in Längsträger (-holme) eingelegt sind. Sie eignen sich zur Förderung von Stückgütern mit ebenen, stabilen und hinreichend großen Auflageflächen. Durch den Einsatz von Kurven, Weichen usw. können vielfältige und auch komplizierte Förderaufgaben bewältigt werden. Bei längeren Förderstrecken werden zur begrenzung der Fördergeschwindigkeit Bremsrollen in die Förderstrecke eingebaut, deren Bremsmoment von in den Rollen eingebauten Fliehkraftreibungsbremsen oder hydraulischen Bremsen erzeugt wird.

Der Stand der Technik zeigt kein bekanntes Anwendungsbeispiel,- bei dem ein Hängeförderer als Schwerkraftförderer eingesetzt wird. Die derzeit bekannten Hängeförderer werden als Elektrohängebahnen oder Power-and-Free-Förderer eingesetzt. Ein Elektrohängebahnsystem (EHB) besteht aus einem Schienensystem, auf dem individuell angetriebene EHB-Fahrzeuge fahren. In der Schiene sind Schleifleitungen integriert, die als Strom- und Informationsleitungen die Fahrzeuge mit Energie und Steuerinformationen versorgen. Die Fahrwerke werden durch einen eigenen Elektromotor über ein Reibrad angetrieben. Der Reibschluss begrenzt die Steigfähigkeit des Fahrwerkes auf Steigungen bis 30° mit einer Nutzlast von 250 kg oder 45° mit 100 kg Nutzlast. Höhensprünge werden sonst mit einem Hubwerk, einem Aufzug mit Schienenabschnitt, überbrückt. Verschiebeweichen verzweigen Materialflüsse und führen sie wieder zusammen. Dazu wird ein Schienenstück verschoben, so dass entweder der gerade oder der gebogene Schienenabschnitt in den Förderkurs eingeschoben wird. Elektrohängebahnsysteme weisen jedoch zahlreiche Nachteile auf. So sind Steig- und Gefällstrecken nur für kleinere Systeme bis ca. 0,2 t Nutzlast möglich und Höhensprünge erfordern Hub- und Senkstationen. Des Weiteren sind Motor und damit Antriebe notwendig, so dass dieses System weniger energieeffizient als ein Schwerkraftförderer ist. Hinzu kommt, dass Teile verschleißen und ggf. ausgetauscht werden müssen. Dadurch entstehen hohe Kosten und Wartungsaufwand.

Die Strecke von Power-and-Free-Fördersystemen besteht aus zwei übereinander angeordneten Schienen. In der oberen Schiene läuft kontinuierlich die (Power-) Kette und zieht über Mitnehmer die in der unteren Schiene laufenden (Free-) Wagen, an denen die Last hängt. Da sich die Wagen nach Bedarf von der laufenden Power-Kette entkoppeln und wieder einklinken lassen, können Staustrecken und Weichen realisiert werden. Auch Power-and-Free-Fördersysteme weisen zahlreiche Nachteile auf. Zunächst entsteht aufgrund der verwendeten Ketten eine extrem hohe Lärmentwicklung. Durch die geschlossenen Kreisläufe verfügen die Systeme über einen komplexen Aufbau. Für das System sind Motoren zum Antrieb notwendig. Dazu verschleißen Systemkomponenten und müssen ggf. ausgetauscht werden. Hierdurch entstehen hohe Kosten und Wartungsaufwand.

Rutschen, Fallrohre und Rollenbahnen arbeiten ausschließlich flurgebunden. Die Elektrohängebahn und das Power-and-Free-Fördersystem sind zwar aufgeständert bzw. flurfrei aber mit externen Antrieben ausgestattet und müssen folglich mit Strom, Hydraulik etc. verbunden werden.

Schwerkraftförderer und insbesondere Hängeförderer benötigen häufig aufgrund des fehlenden Antriebes eine Komponente, welche zur Bremsung des geförderten Gutes geeignet ist. Die DE 1 935 475 U zeigt eine mit einer Bremse versehene Rolle für Fördergutträger oder Rollenbahnen, wobei ein eine geschlossene mit Öl gefüllte Kammer umgebender Drehkörper vorgesehen ist, in welcher Kammer eine Zahnradpumpe mit einem auf einer ortsfesten Achse angeordneten Zahnrad sowie ein auf einer im Drehkörper gelagerten Achse sitzenden und sich mit diesem drehenden, die Pumpe antreibenden Zahnrad angeordnet ist, die bei Drehung der Rolle das in der Kammer befindliche Öl kontinuierlich in Zirkulation versetzt und damit eine sich aus dem Strömungswiderstand ergebende Bremswirkung erzeugt. Für Hängeförderer existieren Bremssysteme bisher jedoch nicht.

GB 2 082 532 A beschreibt einen gattungsgemäßen Laufwagen.

Hier setzt die Erfindung an. Der Erfindung liegt die Aufgabe zugrunde, ein verschleißfreies, energieeffizientes Bremssystem für einen Hängeförderer bereitzustellen, welcher sein erforderliches Bremsmoment in Abhängigkeit der zu fördernden Last und Geschwindigkeit selbst regelt.

Gelöst wird diese Aufgabe durch die Merkmale des Patentanspruchs 1. Die Unteransprüche betreffen besonders bevorzugte Ausgestaltungen der Erfindung.

Erfindungsgemäß wird ein Laufwagen mit einem Bremsmodul für einen Schwerkraft-Hängeförderer vorgeschlagen, wobei das Bremsmodul ein Gehäuse sowie eine erste Welle und eine zweite Welle aufweist. In dem Gehäuse ist eine Hydraulikpumpe angeordnet, wobei.Teile dieser mit der ersten Welle verbunden sind. Durch die Anordnung einer Hydraulikpumpe im Bremsmodul des Laufwagens ist vorteilhaft ein Laufwagen geschaffen, welcher seine Geschwindigkeit durch Nutzung eines Staudruckes selbsttätig reguliert. Dabei ist die Hydraulikpumpe bevorzugt nach Art einer Flügelzellenpumpe oder einer Zahnradpumpe ausgeführt, jedoch nicht auf eine dieser Ausführungsformen beschränkt.

Erfindungsgemäß die Hydraulikpumpe zumindest ein erstes Zahnrad (Antriebsrad) und ein zweites Zahnrad (Abtriebsrad) auf. Das erste Zahnrad ist dabei durch eine erste Welle antreibbar und das zweite Zahnrad ist auf einer zweiten Welle frei drehbar angeordnet. Zwischen Zähnen zumindest eines Zahnrades sowie zwischen zumindest eines Zahnrades und des Gehäuses ist zur Aufnahme einer Flüssigkeit ein Zwischenraum ausgestaltet. Durch das Zusammenwirken der Zahnräder sowie der in dem Zwischenraum aufgenommenen Flüssigkeit ist somit, durch den aufkommenden Staudruck, ein System geschaffen, das bei angetriebener Welle des ersten Zahnrads die Geschwindigkeit selbsttätig regulieren kann. Als Schwerkraft-Hängeförderer wird im Sinne der Erfindung jedes Fördermittel verstanden, welches unter Ausnutzung der Schwerkraft ein Gut transportiert, wobei das Gut unterhalb eines Laufwagens, der einen Teil des Transportmittels darstellt, angeordnet ist.

In bevorzugter Ausgestaltung der Erfindung weist das Gehäuse des Bremsmoduls zumindest einen Zulauf und/oder einen Ablauf für die Flüssigkeit auf. Durch diese Maßnahme wird erreicht, dass die Flüssigkeit nachgefüllt und/oder ausgetauscht werden kann.

In weiterer bevorzugter Ausgestaltung der Erfindung weist das Gehäuse des Bremsmoduls zumindest einen Fluidkanal zum Transport der Flüssigkeit auf. Durch diese Maßnahme wird erreicht, dass durch die Ausgestaltung des Kanals in Abhängigkeit von der Geschwindigkeit der Flüssigkeit eine Bremswirkung im Bremsmodul entfaltet werden kann. So ist der Durchmesser des Fluidkanals bei zu hoher Geschwindigkeit zu verkleinern und bei zu niedriger Geschwindigkeit zu vergrößern.

Erfindungsgemäß kann in dem zumindest einen Fluidkanal ein Drosselventil angeordnet sein. Durch die Möglichkeit zur Drosselung, durch die Aufnahme eines Drosselventils, ist in vorteilhafter Weise erreicht, dass die Geschwindigkeit der Förderung regulierbar ist.

In weiterer bevorzugter Ausgestaltung der Erfindung besteht das Drosselventil zumindest aus einem kegelförmigen Konus und einer Feder. Durch diese Maßnahme wird erreicht, dass durch eine einfach herzustellende Verbindung zwischen dem Kanal zur Leitung der Flüssigkeit und dem Drosselventil eine Geschwindigkeitsregulierung erreicht wird.

In bevorzugter Ausgestaltung der Erfindung weist die Flüssigkeit eine höhe Viskosität auf. In besonders bevorzugter Ausgestaltung der Erfindung ist die Flüssigkeit ein Öl. Versuche haben ergeben, dass ein Öl die erforderlichen Eigenschaften aufweist, welche in diesem System für eine optimale Bremswirkung benötigt werden.

Die Erfindung wird nachfolgend an einem Ausführungsbeispiel anhand der zugehörigen Zeichnungen erläutert. Es zeigen:
- Fig. 1: einen Laufwagen eines Schwerkraft-Hängeförderers mit einem Bremsmodul auf einem Schienenausschnitt in perspektivischer Darstellung,
- Fig. 2: einen Teil des Bremsmoduls aus Fig. 1 in schematischer Perspektivansicht,
- Fig. 3: einen Schnitt durch das Bremsmodul aus Fig. 1 in schematischer Darstellung und
- Fig. 4: ein Drosselventil des Bremsmoduls in schematischer Darstellung.

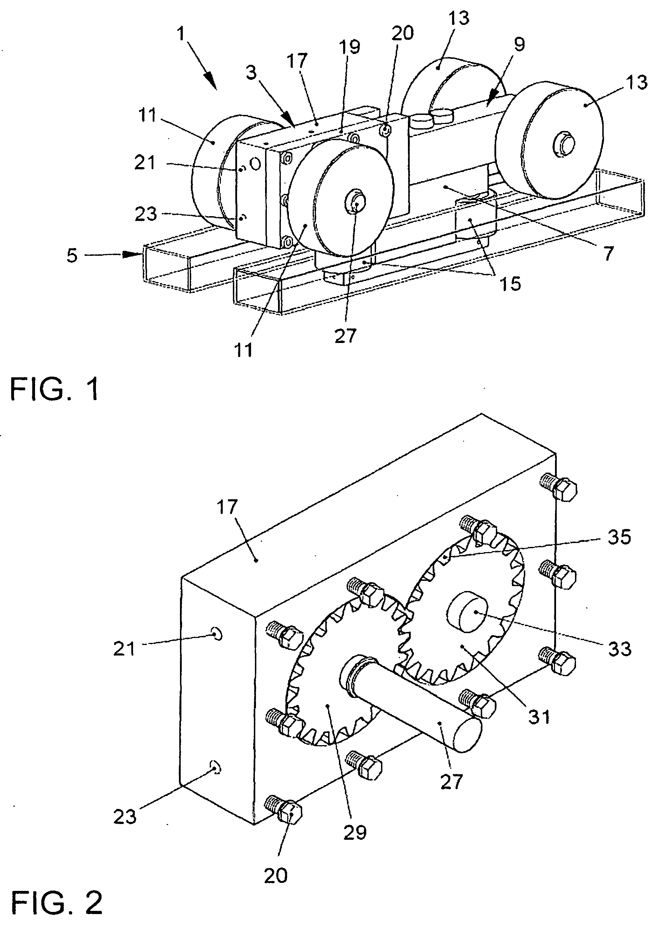

Figur 1 zeigt einen Laufwagen 1 als Teil eines Schwerkraft-Hängeförderers mit einem Bremsmodul 3 auf einem Ausschnitt eines Schienensystems 5. Der Laufwagen 1 besteht dabei im Wesentlichen aus einem Grundkörper 7, einem an diesem angeordneten Ausleger 9, zwei am Bremsmodul 3 angeordneten ersten Laufrollen 11, zwei am Ausleger 9 angeordneten zweiten Laufrollen 13 und zwei am Grundkörper 7 angeordneten Querführungsrollen 15. Das Bremsmodul 3 besteht dabei aus einem Gehäuse 17 und einem Gehäusedeckel 19, welcher mittels Schrauben 20 mit dem Gehäuse 17 verbunden ist. Dabei weist das Bremsmodul 3 stirnseitig einen Zulauf 21 und einen Ablauf 23 auf. Ebenfalls stirnseitig ist ein Drosselventil 25 angeordnet, durch welches eine Drosselung der Durchlaufgeschwindigkeit einer in dem Bremsmodul eingeschlossenen Flüssigkeit reguliert werden kann. Die ersten Laufrollen 11 sind beidseitig am Bremsmodul 3 angeordnet und durch eine Welle 27 miteinander verbunden. Die Welle 27 durchdringt dabei das Bremsmodul 3 und ist formschlüssig mit einem hier nicht dargestellten Zahnrad verbunden. Die zweiten Laufrollen 13 sind kugelgelagert mit dem Ausleger 9 verbunden. Ebenso sind die Querführungsrollen 15 kugelgelagert mit dem Grundkörper 7 verbunden. In dem hier gezeigten Ausführungsbeispiel ist die Bewegungsrichtung des Laufwagens 1 von links nach rechts, sodass der Teil des Laufwagens 1 mit dem Bremsmodul 3 in Bewegungsrichtung hinten liegt.

Figur 2 zeigt das Bremsmodul 3 aus Figur 1 in Teilen. Dargestellt ist das Gehäuse 17 mit einem Antriebsrad 29, welches mit der Welle 27 fest verbunden ist, und einem Abtriebsrad 31, welches frei drehbar auf einer zweiten Welle 33 als eingelagertes mitlaufendes Rad gelagert ist. Zwischen dem Antriebsrad 29, dem Abtriebsrad 31 und dem Gehäuse 17 sind Zwischenräume ausgebildet, insbesondere zwischen den Zähnen des Antriebsrads 29 und des Abtriebsrads 31, welche hier als Zahnradzwischenräume 35 bezeichnet werden. In den Zahnradszwischenräumen 35 ist eine Flüssigkeit F angeordnet, welche über den Zulauf 21 befüllt worden ist. Nicht dargestellt ist in dieser Ansicht der Gehäusedeckel 19, welcher das Bremsmodul 3 derart komplettiert, dass die Flüssigkeit F nur über den im Einsatz verschlossenen Ablauf 23 entweichen kann.

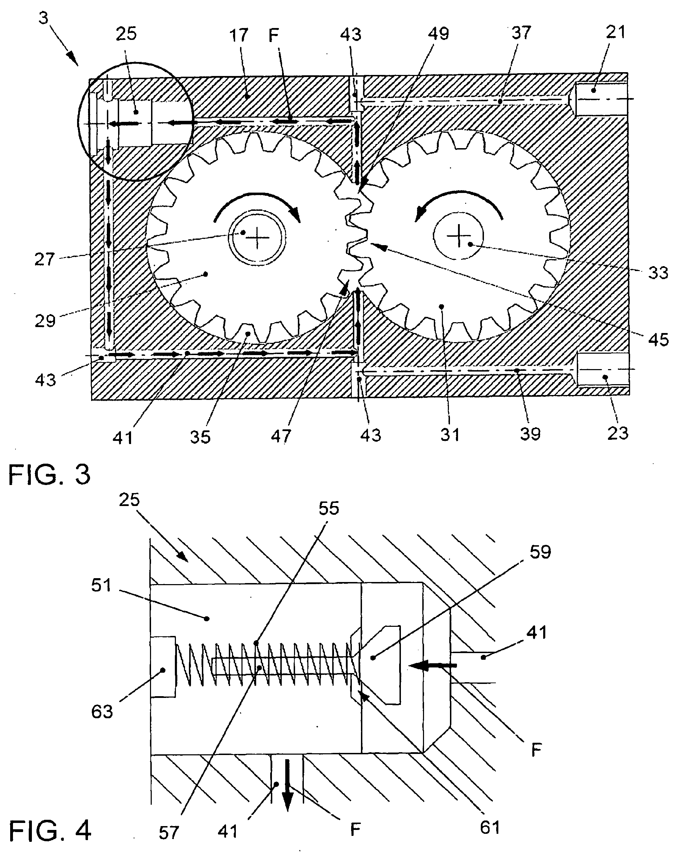

Figur 3 zeigt das Bremsmodul 3 aus Figur 1 in schematischer Schnittdarstellung. Gezeigt wird das Gehäuse 17, in welchem das Antriebsrad 29 auf der ersten Welle 27 und das Abtriebsrad 31 auf der hier nicht dargestellten zweiten Welle 33 gelagert sind. In dem Gehäuse sind ein Befüllkanal 37, welcher mit dem Zulauf 21 verbunden ist und ein Ablaufkanal 39, welcher mit dem Ablauf 23 verbunden ist, angeordnet. Des Weiteren ist in dem Gehäuse 17 ein umlaufender Fluidkanal 41 angeordnet. Sowohl der Befüllkanal 37, als auch der Ablaufkanal 39 sowie der Fluidkanal 41 sind durch Verschlussstücke 43 verschlossen. Des Weiteren ist am Fluidkanal 41 ein Drosselventil 25 angeordnet. In dem vorliegenden Ausführungsbeispiel, in welchem der Laufwagen 1 von links nach rechts bewegt wird, wird das Antriebsrad 29 durch die mit der ersten Welle 27 verbundenen ersten Laufrollen 11 in Richtung mit dem Uhrzeigersinn angetrieben. Dabei steht das Antriebsrad 29 durch Verzahnung mit dem Abtriebsrad 33 in Wirkverbindung, so dass das Abtriebsrad 33 gegen den Uhrzeigersinn dreht. Durch den Zulauf 21 wird eine Flüssigkeit F in das Gehäuse 17 des Bremsmoduls 3 gebracht. Diese sammelt sich beim Befüllen im Fluidkanal 41 sowie in den Zahnradzwischenräumen 35. Nach dem Befüllen mit der Flüssigkeit F wird der Fluidkanal 41 vom Befüllkanal 37 und vom Ablaufkanal 39 mittels der Verschlussstücke 43 getrennt. Sobald der Laufwagen 1 in Bewegung versetzt wird, fließt die Flüssigkeit F durch das Antriebsrad 29 bewegt gegen den Uhrzeigersinn durch den Fluidkanal 41 sowie durch das Drosselventil 25 und mit dem Uhrzeigersinn in den Zahnradzwischenräumen 35 des Abtriebsrads 31. Die Flüssigkeit F in den Zahnradzwischenräumen 35 des Abtriebsrads 31 wird gegen die Richtung des Uhrzeigersinns bewegt. Durch die unterschiedlichen Fließrichtungen der Flüssigkeit F in den Zahnradzwischenräumen 35 entsteht unterhalb des Verzahnungsbereichs 45 ein Saugraum 47 in welchem die Flüssigkeit F angesaugt wird und oberhalb des Verzahnungsbereichs 45 ein Druckraum 49, in welchem die Flüssigkeit F Staudruck ausgesetzt ist.

Die Flüssigkeit F wird im Fluidkanal 41 durch das Drosselventil 25 geführt. Das Drosselventil 25 besteht aus einer Bohrung im Gehäuse 17, in welche ein kegelförmiger Konus mit einer Feder eingefügt ist. Der Konus wird je nach Schnelligkeit des Flüssigkeitendurchflusses und somit mittels des anliegenden Volumenstroms in die Bohrung gedrückt. Bei einer langsamen Geschwindigkeit wirkt die Feder dem Staudruck der Flüssigkeit F entgegen. Ab einer kritischen Geschwindigkeit lässt sich die Feder aufgrund des größer werdenden Staudruckes zusammendrücken, wodurch der Konus in die Bohrung gedrückt wird. Dies hat eine selbstständige Verengung des Fluidkanals 41 an dieser Stelle zur Folge. Durch diese Querschnittsverkleinerung wird der Volumenstrom aufgestaut und die Zahnräder müssen mehr Kraft aufbringen, um das Volumen im Inneren des Gehäuses 17 zu verdrängen. Somit baut sich ein Gegendruck auf, wodurch das jeweils erforderliche Bremsmoment ab einer kritischen Geschwindigkeit hervorgerufen und durch das Antriebsrad 29 auf die mit dem Antriebsrad 29 verbundene erste Welle 27 übertragen wird und somit über die mit der ersten Welle 27 verbundene erste Laufrollen 11 ein gleichmäßiges Bremsen zur Folge hat. Dadurch kommt es zur Verzögerung und zum Abbremsen des gesamten Laufwagens. Somit erfolgt die Bremswirkung, durch die Geschwindigkeit beeinflusst, selbstgesteuert.

Fig. 4 zeigt ein das Drosselventil 25 des Bremsmoduls 3 in schematischer Darstellung. Das Drosselventil weist eine Drosselkammer 51 und ein Drosselelement 53 auf, welches mittels einer Feder 55 zumindest mittelbar an einer Wandungen der Drosselkammer abgestützt ist. Die Drosselkammer 51 ist dabei Bestandteil des Fluidkanals 41. Gegenüber dem Fluidkanal 41 weist die Drosselkammer 51 einen größeren Durchmesser auf, so dass eine innerhalb des Gehäuses 17 geförderte Flüssigkeit F an dem Drosselelement 53 vorbei fließen kann. Das Drosselelement 53 weist an einem freien Ende einen stabförmige Bereich 57 auf, welcher innerhalb der Feder 55 liegt. Des Weiteren weist das Drosselelement 53 an dem anderem freien Ende einen Drosselbereich 59 auf, welcher einen größeren Durchmesser als die stabförmigen Bereiche 57 aufweist. Des Weiteren weist die Drosselkammer 51 in Richtung des Fluidkanals einen trichterförmigen Bereich 61 auf, welcher mit der Geometrie des Drosselbereichs 59 korrespondiert. Sobald der hier nicht dargestellte Laufwagen 1 in Bewegung versetzt wird, fließt die Flüssigkeit F gegen den Uhrzeigersinn durch den Fluidkanal 41 und die Drosselkammer 51 vorbei an dem Drosselelement 53, welches je nach Schnelligkeit des Flüssigkeitsdurchflusses und somit mittels des anliegenden Volumenstroms gegen die Federkraft der Feder 55 nach links gedrückt wird. Bei einer langsamen Geschwindigkeit wirkt die Feder 55 dem Staudruck der Flüssigkeit F entgegen. Ab einer kritischen Geschwindigkeit lässt sich die Feder 55 aufgrund des größer werdenden Staudrucks zusammendrücken, wodurch das Drosselelement 53 in Richtung des Fluidkanals 41 gedrückt wird. Zunächst verengt dabei nur der stabförmigen Bereich 57 den Durchfluss, bei ansteigendem Druck jedoch auch der Drosselbereich 59, welcher bei hier höchst anzunehmendem Druck vollständig zur Anlage an dem trichterförmigen Bereich 61 kommt und somit den Fluidkanal 41 verschließt. Durch das Verschließen des Fluidkanals 41 durch das Drosselelement 53 kommt das System zum Stillstand und die hier nicht dargestellten ersten Laufrollen 11, welche in Verbindung mit dem Antriebsrad 29 stehen, werden größtmöglich gebremst und zum Stillstand gebracht. Durch die Einstellung des Federdrucks der Feder 55 kann über eine Einstellschraube 63 die Bremswirkung zusätzlich beeinflusst und an den Bedarf der Förderung angepasst werden.

### Bezugszeichenliste

- 1: Laufwagen
- 3: Bremsmodul
- 5: Schienensystem
- 7: Grundkörper
- 9: Ausleger
- 11: erste Laufrollen
- 13: zweite Laufrollen
- 15: Querführungsrollen
- 17: Gehäuse
- 19: Gehäusedeckel
- 20: Schraube
- 21: Zulauf
- 23: Ablauf
- 25: Drosselventil
- 27: erste Welle
- 29: Antriebsrad
- 31: Abtriebsrad
- 33: zweite Welle
- 35: Zahnradzwischenräume
- 37: Befüllkanal
- 39: Ablaufkanal
- 41: Fluidkanal
- 43: Verschlussstücke
- 45: Verzahnungsbereich
- 47: Saugraum
- 49: Druckraum
- 51: Drosselkammer
- 53: Drosselelement
- 55: Feder
- 57: Stabförmiger Bereich
- 59: Drosselbereich
- 61: Trichterförmiger Bereich
- 63: Einstellschraube
- F: Flüssigkeit

## Patentansprüche

1. Laufwagen (1) mit ersten Laufrollen (11), zweiten Laufrollen (13) und mit einem Bremsmodul (3) für einen Schwerkraft-Hängeförderer, welches Bremsmodul (3) ein Gehäuse (17) und eine erste Welle (27) sowie eine zweite Welle (33) aufweist, wobei in dem Gehäuse (17) des Bremsmoduls (3) eine Hydraulikpumpe angeordnet ist und Teile dieser mit der ersten Welle (27) verbunden sind, **dadurch gekennzeichnet, dass** die Hydraulikpumpe zumindest ein als Zahnrad ausgestaltetes Antriebsrad (29) und ein als Zahnrad ausgestaltetes Abtriebsrad (31) umfasst, wobei das Antriebsrad (29) durch die erste Welle (27) antreibbar ist und das Abtriebsrad (31) auf der zweiten Welle (33) frei drehbar angeordnet ist und ein Zwischenraum (35) zwischen Zähnen des Antriebsrads (29) und/oder des Abtriebsrads (31) sowie des Gehäuses (17) zur Aufnahme einer Flüssigkeit (F) ausgestaltet ist und wobei das Antriebsrad (29) durch die mit der ersten Welle (27) verbunderen ersten Laufrollen (11) antreibbar ist.

2. Laufwagen (1) nach Anspruch 1, **dadurch gekennzeichnet, dass** das Gehäuse (17) des Bremsmoduls (3) zumindest einen Zulauf (21) und/oder einen Ablauf (23) für die Flüssigkeit (F) aufweist.

3. Laufwagen (1) nach einem der vorhergehenden Ansprüche, **dadurch gekennzeichnet, dass** das Gehäuse (17) des Bremsmoduls (3) zumindest einen Fluidkanal (41) zum Transport der Flüssigkeit (F) aufweist.

4. Laufwagen (1) nach Anspruch 3, **dadurch gekennzeichnet, dass** an dem zumindest einem Fluidkanal (41) ein Drosselventil (25) angeordnet ist.

5. Laufwagen (1) nach Anspruch 4, **dadurch gekennzeichnet, dass** das Drosselventil (25) zumindest aus einem Drosselelement (53) und einer (55) Feder besteht.

6. Laufwagen (1) nach einem der vorhergehenden Ansprüche, **dadurch gekennzeichnet, dass** die Flüssigkeit (F) eine hohe Viskosität aufweist.

7. Laufwagen (1) nach einem der vorhergehenden Ansprüche, **dadurch gekennzeichnet, dass** die Flüssigkeit (F) ein Öl ist.

## Claims

1. Carriage (1) having first running rollers (11), second running rollers (13) and having a braking module (3) for an overhead suspended conveyor, which braking module (3) has a housing (17), a first shaft (27) and a second shaft (33), a hydraulic pump being arranged in the housing (17) of the braking module (3) and parts of the said hydraulic pump being connected to the first shaft (27), **characterized in that** the hydraulic pump comprises at least one drive wheel (29) which is configured as a gearwheel and one output wheel (31) which is configured as a gearwheel, it being possible for the drive wheel (29) to be driven by the first shaft (27) and the output wheel (31) being arranged freely rotatably on the second shaft (33), and an intermediate space (35) for receiving a liquid (F) being configured between teeth of the drive wheel (29) and/or the output wheel (31) and the housing (17), and it being possible for the drive wheel (29) to be driven by the first running rollers (11) which are connected to the first shaft (27).

2. Carriage (1) according to Claim 1, **characterized in that** the housing (17) of the braking module (3) has at least one inlet (21) and/or one outlet (23) for the liquid (F).

3. Carriage (1) according to either of the preceding claims, **characterized in that** the housing (17) of the braking module (3) has at least one fluid duct (41) for transporting the liquid (F).

4. Carriage (1) according to Claim 3, **characterized in that** a throttling valve (25) is arranged on the at least one fluid duct (41).

5. Carriage (1) according to Claim 4, **characterized in that** the throttling valve (25) consists at least of a throttling element (53) and a spring (55).

6. Carriage (1) according to one of the preceding claims, **characterized in that** the liquid (F) has a high viscosity.

7. Carriage (1) according to one of the preceding claims, **characterized in that** the liquid (F) is an oil.

## Revendications

1. Chariot (1) comprenant des premiers rouleaux de roulement (11), des deuxièmes rouleaux de roulement (13) et un module de frein (3) pour un transporteur à charge suspendue opérant par gravité, lequel module de frein (3) présente un boîtier (17) et un premier arbre (27) ainsi qu'un deuxième arbre (33), une pompe hydraulique étant disposée dans le boîtier (17) du module de frein (3) et des parties de celle-ci étant connectées au premier arbre (27), **caractérisé en ce que** la pompe hydraulique comprend au moins une roue d'entraînement (29) configurée sous forme de roue dentée et une roue de sortie (31) configurée sous forme de roue dentée, la roue d'entraînement (29) pouvant être entraînée par le premier arbre (27) et la roue de sortie (31) étant disposée de manière librement rotative sur le deuxième arbre (33) et un espace intermédiaire (35) étant réalisé entre des dents de la roue d'entraînement (29) et/ou de la roue de sortie (31) ainsi que du boîtier (17) pour recevoir un liquide (F) et la roue d'entraînement (29) pouvant être entraînée par le premier rouleau de roulement (11) connecté au premier arbre (27).

2. Chariot (1) selon la revendication 1, **caractérisé en ce que** le boîtier (17) du module de frein (3) présente au moins une amenée (21) et/ou une évacuation (23) pour liquide (F).

3. Chariot (1) selon l'une quelconque des revendications précédentes, **caractérisé en ce que** le boîtier (17) du module de frein (3) présente au moins un canal fluidique (41) pour le transport du liquide (F).

4. Chariot (1) selon la revendication 3, **caractérisé en ce qu'**un clapet d'étranglement (25) est disposé au niveau de l'au moins un canal fluidique (41).

5. Chariot (1) selon la revendication 4, **caractérisé en ce que** le clapet d'étranglement (25) se compose au moins d'un élément d'étranglement (53) et d'un ressort (55).

6. Chariot (1) selon l'une quelconque des revendications précédentes, **caractérisé en ce que** le liquide (F) présente une grande viscosité.

7. Chariot (1) selon l'une quelconque des revendications précédentes, **caractérisé en ce que** le liquide (F) est une huile.
